(19) Europäisches Patentamt / European Patent Office / Office européen des brevets

(11) **EP 4 703 339 A1**

(12) **EUROPEAN PATENT APPLICATION**
published in accordance with Art. 153(4) EPC

(43) Date of publication:
04.03.2026 Bulletin 2026/10

(21) Application number: 24797046.0

(22) Date of filing: **24.04.2024**

(51) International Patent Classification (IPC):
*C05G 5/30* (2020.01)    *B01J 2/00* (2006.01)
*B01J 2/30* (2006.01)    *C05F 11/00* (2006.01)
*C05G 3/00* (2020.01)

(52) Cooperative Patent Classification (CPC):
B01J 2/00; B01J 2/30; C05F 11/00; C05G 3/00;
C05G 5/30

(86) International application number:
**PCT/JP2024/016022**

(87) International publication number:
**WO 2024/225300 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.04.2023 JP 2023074671
16.06.2023 JP 2023099249**

(71) Applicant: **Central Glass Company, Limited
Ube-shi, Yamaguchi 755-0001 (JP)**

(72) Inventors:
- **NOMURA Yusuke
Tokyo 101-0054 (JP)**
- **KONAKAZAWA Masahiro
Tokyo 101-0054 (JP)**

(74) Representative: **Mewburn Ellis LLP
Aurora Building
Counterslip
Bristol BS1 6BX (GB)**

(54) **COATED FERTILIZER**

(57) A coated fertilizer containing a water-soluble granular fertilizer and a coating film covering the water-soluble granular fertilizer in which a content of a substance having a molecular weight of 10000 or more in the coating film is 0 to 10% and a sulfur atom content with respect to a total content of the atoms between atomic numbers 9 (fluorine) and 92 (uranium) in the periodic table of elements in the coating film is 0 to 11% by mass.

FIG.1

EP 4 703 339 A1

**Description**

TECHNICAL FIELD

The present disclosure relates to a coated fertilizer.

BACKGROUND ART

A coated fertilizer is a fertilizer obtained by coating a surface of a water-soluble fertilizer with a film (coating film) formed by stacking layers of an organic or inorganic coating material to control the elution time of the internal fertilizing component.

When a coated fertilizer is used, there is a possibility that particles (shells) formed of the coating film remain after the water-soluble fertilizer in the coated fertilizer is eluted and flow out into the environment, and thus it has been studied to use a coating film that disintegrates easily.

Patent Literature 1 describes a coated fertilizer using, as a coating material, modified sulfur formed by melt-reacting sulfur and a sulfur-modifying agent containing an alicyclic unsaturated hydrocarbon compound at a ratio of 1 to 35 parts by weight of the sulfur-modifying agent to 100 parts by weight of the sulfur.

Patent Literature 2 describes a coated fertilizer using a coating film that contains an $\alpha$-olefin (co)polymer having a crystallization temperature within a specific range, a wax, and a filler and that has a structure in which the $\alpha$-olefin (co) polymer and the wax are phase-separated and in which the wax is finely dispersed.

BACKGROUND ART LITERATURE

PATENT LITERATURE

Patent Literature 1: JP2007-84414A
Patent Literature 2: WO2012/147668 A1

SUMMARY OF INVENTION

TECHNICAL PROBLEM

However, the coated fertilizer containing a large amount of sulfur in the coating material used in Patent Literature 1 has a problem that the strength of the coating film is too low to withstand mechanical fertilization. In addition, the coating film of Patent Literature 2 has a problem that the coating film is difficult to disintegrate due to the excessively high compressive strength.

An object of the present disclosure is to provide a coated fertilizer containing a coating film which can exert well-balanced properties of having enough strength to withstand mechanical fertilization and of easily disintegrating at a low load after the fertilizing component is eluted.

SOLUTION TO PROBLEM

The above problems can be solved by the following configuration.

<1> A coated fertilizer containing a water-soluble granular fertilizer and a coating film covering the water-soluble granular fertilizer

in which a content of a substance having a molecular weight of 10000 or more in the coating film is 0 to 10% and a sulfur atom content with respect to a total content of the atoms between atomic numbers 9 (fluorine) and 92 (uranium) in the periodic table of elements in the coating film is 0 to 11% by mass.

<2> The coated fertilizer according to <1>, in which the content of the substance having a molecular weight of 10000 or more in the coating film is 0 to 7%.
<3> The coated fertilizer according to <1> or <2>, in which the content of the substance having a molecular weight of 10000 or more in the coating film is 0 to 3%.
<4> The coated fertilizer according to any one of <1> to <3>, in which the content of the substance having a molecular weight of 10000 or more in the coating film is 0 to 1%.

<5> The coated fertilizer according to any one of <1> to <4>, in which the coating film does not substantially contain the substance having a molecular weight of 10000 or more.

<6> The coated fertilizer according to any one of <1> to <5>, in which the sulfur atom content with respect to the total content of the atoms between atomic numbers 9 (fluorine) and 92 (uranium) in the periodic table of elements in the coating film is 0 to 9% by mass.

<7> The coated fertilizer according to any one of <1> to <6>, in which the sulfur atom content with respect to the total content of the atoms between atomic numbers 9 (fluorine) and 92 (uranium) in the periodic table of elements in the coating film is 0 to 5% by mass.

<8> The coated fertilizer according to any one of <1> to <7>, in which the sulfur atom content with respect to the total content of the atoms between atomic numbers 9 (fluorine) and 92 (uranium) in the periodic table of elements in the coating film is 0 to 2% by mass.

<9> The coated fertilizer according to any one of <1> to <8>, in which the coating film does not substantially contain any sulfur atom.

<10> A coated fertilizer containing a water-soluble granular fertilizer and a coating film covering the water-soluble granular fertilizer

in which an average crushing load of particles obtained by replacing the water-soluble granular fertilizer contained in the coated fertilizer with water is 0.5 N or less.

<11> A coated fertilizer in which a number of particles of the coated fertilizer having a crack generated on a surface of the coated fertilizer is 15 or less after 100 particles of the coated fertilizer according to any one of <1> to <10> are subjected to mechanical fertilization under the following condition.

(Condition for Mechanical Fertilization)

Using a transplanter in lateral rows for paddy rice manuring adjusted to a fertilization amount of 5 kg/10 a, 100 g of the coated fertilizer is put into a hopper, and the coated fertilizer is recovered from a dropping port.

ADVANTAGEOUS EFFECTS OF INVENTION

According to the present disclosure, a coated fertilizer containing a coating film which can exert well-balanced properties of having enough strength to withstand mechanical fertilization and of easily disintegrating at a low load after the fertilizing component is eluted can be provided.

BRIEF DESCRIPTION OF DRAWINGS

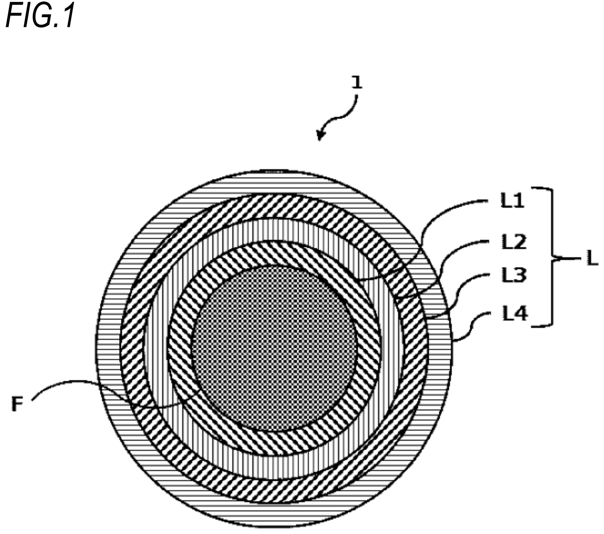

[FIG. 1] FIG. 1 is a schematic view showing a cross section of an example of a coated fertilizer.

DESCRIPTION OF EMBODIMENTS

Hereinafter, the present disclosure will be described in detail, but the description of the constituent elements described below is an example of an embodiment of the present disclosure, and the present disclosure is not limited to these specific contents. Various modifications can be made within the scope of the gist.

The term "to" in the present specification is used with the meanings including the numerical values indicated before and after "to" as a lower limit value and an upper limit value.

(Layer)

In the present specification, the term "layer" refers to a state in which a raw material supplied for coating covers a particle to be coated (a water-soluble granular fertilizer or a coated water-soluble granular fertilizer) and is hardened or solidified. A state in which an additional raw material is supplied onto the existing layer, and the material is allowed to harden or solidify, may be referred to as "layering". The layering may have a boundary between the layers but does not have to have any boundary. In the present specification, when describing "a first layer", "a second layer", and the like, for example, the first layer refers to a layer obtained by hardening or solidifying a coating material derived from a raw material supplied first and may have a boundary in the layer but does not have to have any boundary, and the component ratio or the distribution of the components constituting the layer may be uniform or non-uniform.

[1. Coated Fertilizer]

The coated fertilizer of the present disclosure is a coated fertilizer containing a water-soluble granular fertilizer and a coating film covering the water-soluble granular fertilizer in which the content of a substance having a molecular weight of 10000 or more in the coating film is 0 to 10% and in which the sulfur atom content with respect to the total content of the atoms between atomic numbers 9 (fluorine) and 92 (uranium) in the periodic table of elements in the coating film is 0 to 11% by mass.

The content of the substance having a molecular weight of 10000 or more in the coating film is determined by the following high-temperature GPC measurement.

(High-Temperature GPC Measurement)

The coated fertilizer is pulverized, then washed with water to remove the water-soluble component and filtered to obtain a water-insoluble matter.

The obtained water-insoluble matter is dried in a dryer at 80°C for 24 hours to obtain a measurement sample.

The sample is weighed in such a manner that the estimated organic substance content becomes a concentration of 1 mg/mL (solvent 1,2,4-trichlorobenzene) and shaken and dissolved at 140°C for one hour. When an insoluble matter is contained in the liquid after shaking and dissolution, the insoluble matter is removed by heating filtration using a 0.5 $\mu$m sintered filter, and only the soluble matter is used as a test sample.

The measurement is performed using HLC-8321GPC/HT (detector; RI), using one column of TSKgel guard column $H_{HR}$ (30)HT and three columns of TSKgel GMH$_{HR}$-H (20)HT (manufactured by Tosoh Corporation), using 1,2,4-trichlorobenzene as the eluent under the condition of a flow rate of 1.0 ml/min, an injection amount of 0.3 mL, and a column temperature of 140°C.

The molecular weight analysis is performed by measuring polystyrenes having known molecular weights (15 points in a range of molecular weight of 20,000,000 to 941) in advance, obtaining a calibration curve of the molecular weight and the retention time, measuring the test sample, and determining the relative molecular weight (polystyrene equivalent value) from the peak position and the retention time of the obtained chromatograph.

The content of the substance having a molecular weight of 10000 or more in the present disclosure is determined by the following expression.

(Area of region with molecular weight of 10000 or more in chromatograph) $\times$ 100/(total peak area of chromatograph)

The sulfur atom content with respect to the total content of the atoms between atomic numbers 9 (fluorine) and 92 (uranium) in the periodic table of elements in the coating film is determined by the following fluorescent X-ray measurement.

(Fluorescent X-Ray Measurement)

The coated fertilizer is pulverized, then washed with water to remove the water-soluble component and filtered to obtain a water-insoluble matter.

The obtained water-insoluble matter is dried in a dryer at 80°C for 24 hours to obtain a measurement sample.

The measurement sample is subjected to scanning all elements between atomic numbers 9 (fluorine) and 92 (uranium) in the periodic table of elements using a fluorescent X-ray analyzer ("Supermini200" manufactured by Rigaku Holdings Corporation, to measure the component contents of the measurement sample. The condition of the excitation X-ray tube is 50 kV and 4.0 mA.

The sulfur atom content with respect to the total content of the atoms between atomic numbers 9 (fluorine) and 92 (uranium) in the periodic table of elements in the coating film of the present disclosure is determined by the following expression.

(Sulfur atom content of coating film) $\times$ 100/(total content of atoms between atomic numbers 9 (fluorine) and 92 (uranium) in periodic table of elements in coating film)

The content of the substance having a molecular weight of 10000 or more in the coating film is preferably 0 to 7%, more preferably 0 to 3%, and further preferably 0 to 1%.

It is particularly preferable that the coating film does not substantially contain any substance having a molecular weight of 10000 or more. That the coating film does not substantially contain any substance having a molecular weight of 10000 or more means that the content of the substance having a molecular weight of 10000 or more in the coating film is equal to or less than the detection lower limit and is, for example, 0.1% or less.

The sulfur atom content with respect to the total content of the atoms between atomic numbers 9 (fluorine) and 92 (uranium) in the periodic table of elements in the coating film is preferably 0 to 9% by mass, more preferably 0 to 5% by mass, and further preferably 0 to 2% by mass.

It is particularly preferable that the coating film does not substantially contain any sulfur atom. That the coating film does not substantially contain any sulfur atom means that the sulfur atom content with respect to the total content of the atoms between atomic numbers 9 (fluorine) and 92 (uranium) in the periodic table of elements in the coating film is less than the detection lower limit and is, for example, less than 1% by mass. Although details are unknown, since sulfur is present in a crystalline state rather than a polymer, when the content thereof in the coating film is too high, the coating film tends to have decreased strength and to become difficult to withstand mechanical fertilization. Therefore, the sulfur atom content of the coating film is preferably as small as possible.

Moreover, the present disclosure also relates to a coated fertilizer containing a water-soluble granular fertilizer and a coating film covering the water-soluble granular fertilizer in which an average crushing load of particles obtained by replacing the water-soluble granular fertilizer contained in the coated fertilizer with water is 0.5 N or less.

When 100 particles of the coated fertilizer of the present disclosure are subjected to mechanical fertilization under the following condition and when the coated fertilizer is then observed with an optical microscope, the number of particles of the coated fertilizer having a crack generated on the surface is preferably 15 or less.

(Condition for Mechanical Fertilization)

Using a transplanter in lateral rows for paddy rice manuring adjusted to a fertilization amount of 5 kg/10 a, 100 g of the coated fertilizer is put into a hopper, and the coated fertilizer is recovered from a dropping port. As the transplanter in lateral rows for paddy rice manuring, for example, EP6D (manufactured by KUBOTA Corporation) can be used.

<Water-Soluble Granular Fertilizer>

The coated fertilizer of the present disclosure contains a water-soluble granular fertilizer. The water-soluble granular fertilizer is used as a fertilizing component. The water-soluble granular fertilizer is not particularly limited as long as the water-soluble granular fertilizer is water-soluble. Examples of the water-soluble granular fertilizer include urea, ammonium chloride, ammonium sulfate, ammonium nitrate, potassium chloride, potassium nitrate, sodium nitrate, potassium ammonium phosphate, ammonium phosphate, and ammonium phosphate lime, and urea is preferable. The water-soluble granular fertilizer may be a fertilizer using one kind selected from the above or may be a composite fertilizer using two or more kinds.

The water-soluble granular fertilizer may contain water-soluble or insoluble impurities or the like as long as the properties of the fertilizer are not significantly affected.

The size and the shape of the water-soluble granular fertilizer are not particularly limited, and those having a generally used size can be used. For example, the water-soluble granular fertilizer may be solid particles (for example, spherical, substantially spherical, rod-like, needle-like, rectangular, flat, or unformed), and the particle size by sieving is preferably 1.0 mm to 5.0 mm and may be more preferably 2.0 mm to 4.0 mm, in view of convenience when spraying over an agricultural field using an existing machine or the like.

A commercially available water-soluble granular fertilizer can be used, or the water-soluble granular fertilizer can also be produced, for example, by a known method such as an extrusion granulation method and a compression granulation method.

<Coating Film>

The coating film in the coated fertilizer of the present disclosure refers to the entire film covering the water-soluble granular fertilizer. The film on the water-soluble granular fertilizer may be in contact with the surface of the water-soluble granular fertilizer, or any film or layer may be interposed between the water-soluble granular fertilizer and the film. The surface of the coating film may have any particles or the like. In the present specification, the particles attached to the surface of the coating film after the formation of the coating film are not included in the coating film.

In the coated fertilizer of the present disclosure, the coating film is composed of at least one layer, preferably composed of at least two layers, and more preferably composed of at least four layers. The upper limit of the layer number constituting the coating film is not particularly limited but may be, for example, 100 or less or 50 or less.

In the present disclosure, when there are two or more layers covering the water-soluble granular fertilizer, the entire film including the two or more layers is referred to as the "coating film".

When there are two or more layers constituting the coating film, the layers may have different compositions or may all have the same composition. The term "composition" refers to the components contained in the layer and the contents thereof.

The coating film preferably contains a salt of a fatty acid having 20 or more carbon atoms and more preferably contains a salt of a fatty acid having 20 or more carbon atoms and a wax.

The fatty acid having 20 or more carbon atoms is also referred to as a "specific fatty acid", and a salt of the fatty acid having 20 or more carbon atoms is also referred to as a "salt of the specific fatty acid".

In all the salts of the fatty acids contained in the coating film, a salt of a fatty acid other than the salt of the specific fatty acid may be contained as long as various performances of the coating film are not significantly impaired, but the main component of the salt of the fatty acid contained in the coating film is desirably the salt of the specific fatty acid. The "main component" refers to the component that is most abundant of the salts of the fatty acids and may be, for example, a component with a content of 60% by mass or more when the total mass of the salts of the fatty acids contained in the coating film is 100% by mass. In addition, the main component may be preferably a component with a content of 75% by mass or more, more preferably a component with a content of 80% by mass or more, further preferably a component with a content of 85% by mass or more, and particularly preferably a component with a content of 90% by mass or more. The upper limit of the content of the main component is not particularly limited but may be, for example, 100% by mass or less, and preferably 98% by mass or less. When two or more kinds of salt of the specific fatty acid are contained, the total value thereof may be the "content of the salt of the specific fatty acid".

When there are two or more layers constituting the coating film, the salt of the specific fatty acid and the wax may be contained in the same layer or may be contained in different layers (that is, a layer contains the salt of the specific fatty acid but does not contain the wax, and another layer does not contain the salt of the specific fatty acid but contains the wax).

The coating film is preferably composed of at least one layer and preferably has at least one layer containing the salt of the specific fatty acid and the wax.

The coating film is more preferably composed of at least four layers and more preferably has at least four layers containing the salt of the specific fatty acid and the wax.

The coating film is preferably composed of at least one layer and preferably contains the salt of the specific fatty acid and the wax in the layer present at a position closest to the water-soluble granular fertilizer (the layer in contact with the surface of the water-soluble granular fertilizer).

FIG. 1 is a schematic view showing a cross section of an example of the coated fertilizer of the present disclosure.

A coated fertilizer 1 of FIG. 1 contains a water-soluble granular fertilizer F and a coating film L covering the water-soluble granular fertilizer F.

The coating film L is composed of four layers of a first layer L1, a second layer L2, a third layer L3, and a fourth layer L4 in order from the side closer to the water-soluble granular fertilizer F.

Preferably, at least any one layer of the first layer L1, the second layer L2, the third layer L3, and the fourth layer L4 contains the salt of the specific fatty acid, and at least any one layer contains the wax.

Preferably, at least any one layer of the first layer L1, the second layer L2, the third layer L3, and the fourth layer L4 contains the salt of the specific fatty acid and the wax.

More preferably, the first layer L1 contains the salt of the specific fatty acid and the wax.

Particularly preferably, the first layer L1, the second layer L2, the third layer L3, and the fourth layer L4 contain the salt of the specific fatty acid and the wax.

Although the boundaries of the layers L1 to L4 are clearly illustrated in FIG. 1, the boundaries may be unclear. The thicknesses of the layers may be the same or different from each other.

The film thickness of the coating film can be appropriately changed according to a desired elution pattern but may be, for example, 10 μm to 250 μm, 30 μm to 200 μm, or 50 μm to 150 μm.

The total of the film thicknesses of the layers is regarded as the film thickness of the coating film.

The thickness of each layer constituting the coating film is not particularly limited and can be appropriately changed depending on the film thickness of the coating film but is preferably, for example, 5 μm to 30 μm from the viewpoint of ease of coating.

The total mass of the coating film is preferably 1.0 to 30% by mass, more preferably 2.0 to 25% by mass, and further preferably 3.0 to 20% by mass with respect to the total mass of the coated fertilizer.

The ratio of the total mass of the coating film to the total mass of the coated fertilizer is also referred to as a coating rate.

$$\text{Coating rate (\%)} = (\text{total mass of coating film/total mass of coated fertilizer}) \times 100$$

The fertilizer moisture permeability of the coating film at 40°C is preferably 52 g/(m$^2$·24 h) or less.

The fertilizer moisture permeability indicates the sum of the ease of permeation of water in the coating film and the ease of permeation of urea dissolved in water (urea water) in the coating film. Further, the fertilizer moisture permeability may be more preferably 50 g/(m$^2$·24 h) or less, further preferably 20 g/(m$^2$·24 h) or less, or 10 g/(m$^2$·24 h) or less.

<Other Optional Components>

The coated fertilizer of the present disclosure may have an optional material on the surface of the coating film for the purpose of preventing scratches or floating in water, preventing solidification, and the like. Examples thereof include talc, silica, and diatomaceous earth. These optional materials are applied to the surface of the coated fertilizer to adhere to the coating film. As it will be described later, the optional material may be mixed in the coating film as a component of the coating material.

In addition, the coated fertilizer of the present disclosure may contain an unreacted raw material (for example, a fatty acid such as the specific fatty acid, or a metal hydroxide), a reaction byproduct, or the like at the time of forming the coating film described later in the coating film.

Hereinafter, the components which may be contained in the coating film will be described.

(Salt of Specific Fatty Acid)

As the salt of the specific fatty acid, a salt of a fatty acid having 20 or more carbon atoms is preferably used. From the viewpoint of the strength of the coating film, a salt of a fatty acid having 21 or more carbon atoms is more preferably contained, and a salt of a fatty acid having 31 or more carbon atoms is particularly preferably contained. Moreover, from the viewpoint of the strength of the coating film, the main component of the salt of the fatty acid contained in the coating film is further preferably a salt of a fatty acid having 31 or more carbon atoms. The upper limit of the carbon atom number of the salt of the specific fatty acid is not particularly limited but may be, for example, 100 or less.

The salt of the specific fatty acid may be a salt of a monobasic acid, a salt of a dibasic acid, or a salt of a tribasic acid but preferably contains at least one of a salt of a dibasic acid and a salt of a tribasic acid. The salt of the specific fatty acid contained in the coating film may be one kind alone or two or more kinds.

The salt of the specific fatty acid preferably contains at least one of a salt of a dimer acid and a salt of a trimer acid.

More preferably, with respect to the total amount of the salts of the specific fatty acids contained in the coating film, 60% by mass or more in total may be at least one of a salt of a dimer acid and a salt of a trimer acid. Further preferably, at least a salt of a dimer acid may be contained in a total amount of 60% by mass or more, and further preferably, at least a salt of a dimer acid may be contained in a total amount of 70% by mass or more. The upper limit of the content of the salt of the dimer acid is not particularly limited but may be, for example, 100% by mass or less, 90% by mass or less, or 85% by mass or less.

The salt of the specific fatty acid preferably contains a salt of a fatty acid having at least one of a branched structure and a ring structure. When the specific fatty acid has the above structure, the specific fatty acid tends to be compatible with the wax, and the wax tends to be easily retained inside the salt of the fatty acid of the coating film, which is preferable. The main component of the salt of the fatty acid contained in the coating film is more preferably a salt of a fatty acid having at least one of a branched structure and a ring structure.

The branched structure refers to a structure in which at least one of the hydrogen atoms of the hydrocarbon chain of the fatty acid is replaced with carbon, and the ring structure refers to an annular body of a hydrocarbon.

The salt of the specific fatty acid may be a salt of a saturated fatty acid or a salt of an unsaturated fatty acid.

The salt of the specific fatty acid is preferably a salt of an aliphatic carboxylic acid having 20 or more carbon atoms.

The salt of the specific fatty acid is preferably a salt of a vegetable fatty acid having 20 or more carbon atoms.

Specific examples of the specific fatty acid of the salt of the specific fatty acid will be described later.

The salt of the specific fatty acid is preferably a metal salt of the specific fatty acid, and more preferably at least one of an alkali metal salt of the specific fatty acid and an alkaline earth metal salt of the specific fatty acid.

For example, the salt is further preferably at least one selected from the group consisting of a sodium salt of the specific fatty acid, a potassium salt of the specific fatty acid, a lithium salt of the specific fatty acid, a calcium salt of the specific fatty acid, and a magnesium salt of the specific fatty acid.

Since the salt of the specific fatty acid tends to be difficult to coat even when the salt itself of the specific fatty acid is supplied onto the water-soluble granular fertilizer, a salt obtained by the production method described later is preferably used. Specifically, a coating film of the salt of the specific fatty acid can be obtained by reacting the specific fatty acid and a metal hydroxide on the water-soluble granular fertilizer. From the viewpoint of easily reacting with the specific fatty acid and forming the salt of the specific fatty acid, it is preferable to use calcium hydroxide as the metal hydroxide. That is, the salt of the specific fatty acid is particularly preferably a calcium salt of the specific fatty acid.

The content of the salt of the specific fatty acid is not particularly limited as long as a desired coating film can be obtained. For example, the content is preferably 1 to 99% by mass, more preferably 5 to 95% by mass, and further preferably 10 to 90% by mass with respect to the total mass of the coating film.

(Wax)

The wax is not particularly limited.

The wax is preferably liquid at a coating temperature, and a wax having a melting point of 45 to 100°C is more preferable. Examples thereof include petroleum-based waxes such as paraffin wax, plant-based waxes such as carnauba wax, polymer waxes such as polyethylene wax, hydrogenated oils such as palm hydrogenated oil and beef tallow hydrogenated oil, and synthetic ester waxes.

The wax preferably contains at least one of a petroleum-based wax and a plant-based wax. When the mass of all the waxes contained in the coating film is regarded as 100, the total content of the petroleum-based wax and the plant-based wax is more preferably 80% by mass or more, and all the waxes contained in the coating film are further preferably at least one of a petroleum-based wax and a plant-based wax.

The wax content is not particularly limited. For example, the content is preferably 1 to 40% by mass, more preferably 2.5 to 30% by mass, and further preferably 5 to 20% by mass with respect to the total mass of the coating film.

(Other Components)

The coating film preferably contains the salt of the specific fatty acid and the wax and may further contain another component in the coating film.

Examples of the other component include resins, surfactants, talc, diatomaceous earth, silica, and sulfur powder. When these components are optional components in the coating film, the components can be taken into the coating film as the coating material is hardened or solidified by supplying the components before the coating material supplied into the coating apparatus is cured or solidified.

The other component content may be 0 to 20% by mass or 0 to 10% by mass with respect to the total mass of the coating film. However, it is required to satisfy the conditions that the content of the substance having a molecular weight of 10000 or more in the coating film is 0 to 10% and that the sulfur atom content with respect to the total content of the atoms between atomic numbers 9 (fluorine) and 92 (uranium) in the periodic table of elements in the coating film is 0 to 11% by mass.

As long as the condition that the content of the substance having a molecular weight of 10000 or more in the coating film is 0 to 10% is satisfied, the coating film may contain a resin (for example, polyethylene, polyester, acrylic resin, or polyurethane) but does not have to contain any resin, but from the viewpoint of reducing the environmental load, the coating film does not preferably contain any resin.

[2. Production Method of Coated Fertilizer]

Hereinafter, a method for producing the coated fertilizer of the present disclosure will be described.

The method for producing the coated fertilizer of the present disclosure is preferably a method for producing a coated fertilizer containing a water-soluble granular fertilizer and a coating film covering the water-soluble granular fertilizer which includes forming the coating film containing a salt of a fatty acid having 20 or more carbon atoms and a wax on the water-soluble granular fertilizer. The water-soluble granular fertilizer, the salt of the fatty acid having 20 or more carbon atoms (the salt of the specific fatty acid), and the wax are as described above.

Examples of the method for producing the coated fertilizer include the method 1 and the method 2 below, and the method 1 below is preferably included from the viewpoint of the strength of the coating film. From the viewpoint of easily preventing detachment between layers, the method 1 below may be preferably included.

<Method 1>

A method for producing a coated fertilizer in which the coating film has at least one layer containing a salt of a specific fatty acid and a wax, and the following steps 1 to 3 are performed in this order.

Step 1: a step of bringing a water-soluble granular fertilizer into a flowing state or a rolling state in a coating apparatus.

Step 2: a step of supplying a specific fatty acid and a wax into the coating apparatus.

Step 3: a step of supplying a metal hydroxide into the coating apparatus, reacting the specific fatty acid with the metal hydroxide to produce the salt of the specific fatty acid, and forming a layer containing the salt of the specific fatty acid and the wax.

<Method 2>

A method for producing a coated fertilizer in which the coating film has at least one layer A containing a salt of a specific fatty acid and at least one layer B containing a wax, and the following step 1, step a, and step b are performed in this order.

Step 1: a step of bringing a water-soluble granular fertilizer into a flowing state or a rolling state in a coating apparatus.

Step a: a step of supplying a specific fatty acid and a metal hydroxide into the coating apparatus, reacting the specific fatty acid with the metal hydroxide to produce the salt of the specific fatty acid, and forming the layer A.

Step b: a step of supplying a wax and the metal hydroxide into the coating apparatus, solidifying the wax, and forming the layer B on the surface of the layer A.

First, the method 1 will be described.

(Step 1)

The step 1 will be described.

In the step 1, the water-soluble granular fertilizer is brought into a flowing state or a rolling state in a coating apparatus. By bringing the water-soluble granular fertilizer into a flowing state or a rolling state, the uniformity of the film thickness of the coating film is improved.

The coating apparatus is not particularly limited, but an apparatus such as a rotating drum can be preferably used. In the step 1, the temperature in the apparatus may be maintained at about the coating temperature in advance, and the water-soluble granular fertilizer may be heated before the step 2. The coating temperature may be determined depending on the melting points of the specific fatty acid, the wax, and the water-soluble granular fertilizer used and is not particularly limited, but the coating temperature is, for example, 20 to 150°C, preferably 40 to 100°C. The coating temperature is the temperature at which the step 2 and the step 3 are performed. In addition, the humidity in the apparatus may be adjusted so as not to hinder the step 2 to the step 3 described later.

(Step 2)

The step 2 will be described.

In the step 2, the specific fatty acid and the wax are supplied into the coating apparatus. By the step 2, the specific fatty acid and the wax are supplied onto the water-soluble granular fertilizer in the flowing state or the rolling state.

When supplied into the coating apparatus in the step 2, the specific fatty acid and the wax are preferably liquid.

When the step 2 is performed, the water-soluble granular fertilizer is preferably maintained in the rolling state or the flowing state. Moreover, when the step 2 is performed, as in the step 1, heating is preferably performed in order to maintain the inside of the apparatus at the coating temperature.

The method for supplying the specific fatty acid and the wax is not particularly limited, and examples thereof include a spraying method and a dropping method, but the method is not limited thereto. In addition, an optional component (for example, water, a solvent, or various additives) may be contained as long as the solid state of the water-soluble granular fertilizer can be maintained and the compatibility between the specific fatty acid and the wax, the reactivity between the specific fatty acid and the metal hydroxide described later, and the like are not impaired.

The specific fatty acid and the wax may be each independently supplied or may be supplied after a part or all of the components are mixed in advance. When each independently supplied, the specific fatty acid and the wax may be supplied at the same timing, supplied sequentially, or supplied at different timings of starting supplying and a part thereof may be supplied simultaneously.

The step 2 preferably includes a step 2a of supplying the specific fatty acid and the wax to the surface of the water-soluble granular fertilizer. A layer that is present at a position closest to the water-soluble granular fertilizer and that contains the salt of the specific fatty acid and the wax is formed by the step 2a and the step 3 described later. For example, when the coated fertilizer 1 of FIG. 1 is produced by the method 1 including the step 2a, the first layer L1 becomes a layer containing the salt of the specific fatty acid and the wax.

(Specific Fatty Acid)

As the specific fatty acid, a fatty acid having 20 or more carbon atoms which can form the salt of the specific fatty acid described above and which is liquid at the coating temperature may be used. A fatty acid having 21 or more carbon atoms is preferably contained, and a fatty acid having 31 or more carbon atoms is more preferably contained. The upper limit of the carbon atom number of the specific fatty acid is not particularly limited but may be, for example, 100 or less.

The specific fatty acid may be a monobasic acid, a dibasic acid, or a tribasic acid but preferably contains at least one of a dibasic acid and a tribasic acid.

The specific fatty acid preferably contains at least one of a dimer acid and a trimer acid.

The specific fatty acid preferably contains a fatty acid having at least one of a branched structure and a ring structure.

The specific fatty acid may be a saturated fatty acid or an unsaturated fatty acid.

The specific fatty acid is preferably an aliphatic carboxylic acid having 20 or more carbon atoms.

The specific fatty acid is preferably a vegetable fatty acid having 20 or more carbon atoms.

As the specific fatty acid as described above, a known saturated fatty acid or conjugated fatty acid having 20 or more carbon atoms can be suitably used. Moreover, a commercially available product may be used, or the specific fatty acid may be synthesized by a known method. Specific examples of the specific fatty acid as described above include SB-20, IPU-22, and IPS-22 (all manufactured by Okamura Oil Mill, Ltd.), cyclocarboxypropyloleic acid (manufactured by ALFA chemistry), and Tsunodym 205 and Tsunodym 346 (both manufactured by Tsuno Oleochemicals Co., Ltd.) as commercially available products. In the case of a vegetable fatty acid, examples thereof include those obtained by modifying oleic acid, linoleic acid, linolenic acid, erucic acid, dehydrated condensed castor oil fatty acid, and the like to have 20 or more carbon atoms, and those obtained by forming them into a dimer or a trimer.

(Step 3)

The step 3 will be described.

In the step 3, by supplying a metal hydroxide into the coating apparatus and reacting the specific fatty acid with the metal hydroxide, the salt of the specific fatty acid is produced, and a layer containing the salt of the specific fatty acid and the wax is formed.

When supplied into the coating apparatus in the step 3, the metal hydroxide is preferably powder. In the case of powder, the water content and the particle shape are preferably adjusted to such an extent that the reactivity between the specific fatty acid and the metal hydroxide is not impaired. For example, when the total mass of the specific fatty acid and the wax used in the step 2 and the metal hydroxide used in the step 3 is regarded as 100 in the coating apparatus before the reaction between the specific fatty acid and the metal hydroxide, water may be contained in the range of 50% by mass or less, and more preferably 0.1 to 30% by mass.

When the step 3 is performed, the water-soluble granular fertilizer is desirably maintained in the rolling state or the flowing state. Moreover, when the step 3 is performed, as in the step 1, heating is preferably performed in order to maintain the inside of the apparatus at the coating temperature.

The method for supplying the metal hydroxide is not particularly limited. For example, when the metal hydroxide is liquid, examples thereof include a spraying method and a dropping method as in the step 2, and when the metal hydroxide is solid, examples thereof include a method of mechanically supplying while dispersing (mechanical type), and a method of supplying together with gas (air flow type), but the method is not limited thereto.

For supplying, the entire amount may be supplied at one time, or the metal hydroxide may be sequentially supplied over a predetermined time. In addition, the metal hydroxide may be divided and supplied at predetermined time intervals.

(Metal Hydroxide)

The metal hydroxide preferably contains at least one of a hydroxide of an alkali metal and a hydroxide of an alkaline earth metal and more preferably contains at least one selected from the group consisting of sodium hydroxide, potassium hydroxide, lithium hydroxide, calcium hydroxide, and magnesium hydroxide. As described above, calcium hydroxide is further preferably used because the reaction with the specific fatty acid is good.

Regarding the mass of the metal hydroxide used in the step 3 and the mass of the specific fatty acid used in the step 2, (the mass of the metal hydroxide/the mass of the specific fatty acid) is preferably 10/1 to 0.5/1, and more preferably 5/1 to 1/1.

After the step 3, the step 2 and the step 3 are preferably further performed each once or more.

When one cycle includes performing the step 2 and the step 3 in this order each once, four cycles or more are preferably performed. For example, when the coated fertilizer 1 of FIG. 1 is produced by the method 1 including performing four cycles, where one cycle includes performing the step 2 and the step 3 in this order each once, the first layer L1, the second layer L2, the third layer L3, and the fourth layer L4 all become layers containing the salt of the specific fatty acid and the wax.

In the method 1, at least one of the step a and the step b of the method 2 may be performed once or more after the step 1.

Next, the method 2 will be described.

The step 1 is the same as the step 1 of the method 1 described above.

(Step a)

The step a will be described.

In the step a, by supplying a specific fatty acid and a metal hydroxide into the coating apparatus and reacting the specific fatty acid with the metal hydroxide, the salt of the specific fatty acid is produced, and the layer A is formed. The layer A is one of the layers constituting the coating film. By the step a, the layer A having the salt of the specific fatty acid is formed on the water-soluble granular fertilizer in a flowing state or a rolling state.

When supplied into the coating apparatus in the step a, the specific fatty acid is preferably liquid.

When the step a is performed, the water-soluble granular fertilizer is preferably maintained in the rolling state or the flowing state. Moreover, when the step a is performed, as in the step 1, heating is preferably performed in order to maintain the inside of the apparatus at the coating temperature.

The method for supplying the specific fatty acid and the method for supplying the metal hydroxide may be the same as those in the step 2 and the step 3 described above. When the metal hydroxide is powder, the water content and the particle shape are preferably adjusted to such an extent that the reactivity between the specific fatty acid and the metal hydroxide is not impaired. For example, when the total mass of the specific fatty acid and the metal hydroxide used in the step a is regarded as 100 in the coating apparatus before the reaction between the specific fatty acid and the metal hydroxide, water may be contained in the range of 60% by mass or less, and more preferably 0.2 to 40% by mass.

The specific fatty acid and the metal hydroxide may be each independently supplied. When each independently supplied, the specific fatty acid and the metal hydroxide may be supplied at the same timing, supplied sequentially, or supplied at different timings of starting supplying and a part thereof may be supplied simultaneously. From the viewpoint of ease of coating, the supply of the metal hydroxide is preferably started at least after the supply of the specific fatty acid is started.

The specific fatty acid and the metal hydroxide are as described above.

(Step b)

The step b will be described.

In the step b, by supplying a wax and the metal hydroxide into the coating apparatus and solidifying the wax, the layer B is formed on the surface of the layer A.

When supplied into the coating apparatus in the step b, the wax is preferably liquid.

When the step b is performed, the water-soluble granular fertilizer is preferably maintained in the rolling state or the flowing state. Moreover, when the step b is performed, as in the step 1, heating is preferably performed in order to maintain the inside of the apparatus at the coating temperature.

The method for supplying the wax may be the same as that in the step 3 described above.

The method for supplying the metal hydroxide may be the same as that in the step a described above.

The wax and the metal hydroxide may be each independently supplied. When each independently supplied, the wax and the metal hydroxide may be supplied at the same timing, supplied sequentially, or supplied at different timings of starting supplying and a part thereof may be supplied simultaneously. From the viewpoint of ease of coating, the supply of the metal hydroxide is preferably started at least after the supply of the wax is started.

The wax and the metal hydroxide are as described above.

After step b, step a and step b are preferably further performed at least once each.

When one cycle includes performing the step a and the step b in this order each once, four cycles or more are preferably performed. For example, when the coated fertilizer 1 of FIG. 1 is produced by the method 2 including performing two cycles, where one cycle includes performing the step a and the step b in this order each once, the first layer L1 and the third layer L3 become layers containing a salt of the specific fatty acid (layers A), and the second layer L2 and the fourth layer L4 become layers containing the wax (layers B).

In the method 2, at least one of the step 2 or the step 3 of the method 1 may be performed once or more after the step 1.

After the method 1 and the method 2, the surface of the coating film may be dried, or a reaction of the unreacted specific fatty acid may be promoted with further maintaining the rolling state or the flowing state. In addition, the heating in the coating apparatus may be stopped at this point to decrease the temperature to a desired temperature.

EXAMPLE

Examples of the present disclosure will be described below. Note that the present disclosure is not limited to the following Examples.

[Production of Samples]

(Comparative Example 1)

A commercially available granular coated fertilizer (product name; SCU (S) manufactured by SunAgro Co., Ltd.) was used as it was.

(Comparative Example 2)

A commercially available granular coated fertilizer (product name; SCU (LL) manufactured by SunAgro Co., Ltd.) was used as it was.

(Comparative Example 3)

The compound fertilizer and the coated fertilizer were visually identified from a commercially available compound mixed fertilizer (product name; Harebarekunn manufactured by JCAM AGRI. CO., LTD.), and the compound fertilizer was removed to obtain the coated fertilizer.

[Materials Used]

The materials used for preparing the coated fertilizers of the Examples and the Comparative Examples below will be described.

<Water-Soluble Granular Fertilizer>

Urea having a particle size of 2.0 mm to 4.0 mm was used.

<Specific Fatty Acid 1>

Tsunodym 205 (containing a dimer acid (having 36 carbon atoms) most abundantly) manufactured by Tsuno Oleochemicals Co., Ltd. was used.

<Specific Fatty Acid 2>

A branched dibasic fatty acid SB-20 (containing a dimer acid (having 20 carbon atoms) most abundantly) manufactured by OKAMURA OIL MILL, LTD was used.

<Wax 1>

Paraffin wax (melting point; 50°C) manufactured by NIPPON SEIRO CO., LTD. was used.

<Wax 2>

Hydrogenated palm hard A (melting point; 58°C) manufactured by New Japan Chemical Co., Ltd. was used.

<Metal Hydroxide>

Fine particle slaked lime M-300 manufactured by INOUE MITSUKICHI Co., Ltd. was used.

<Sulfur Powder>

Sulfur powder manufactured by Wako Pure Chemical Industries, Ltd. was used.

<Polyol>

Placcel 205 (polycaprolactone diol having a weight-average molecular weight of 500) manufactured by Daicel Corporation was used.

<Polyisocyanate>

4,4-Diphenylmethane diisocyanate manufactured by Tokyo Chemical Industry Co., Ltd. was used.

[Production of Samples]

(Example 1)

In Example 1, a coated fertilizer was produced by the method 1 described above, as will be described in detail below.

The water-soluble granular fertilizer (1000 g) was charged to a drum-type rolling coating apparatus having a diameter of 300 mm, and the temperature in the coating apparatus was maintained at 70°C by a hot air generator with rolling at 25 rpm (rotations per minute) (step 1).

Next, with maintaining the rolling state, a liquid obtained by mixing the specific fatty acid 1 (2.68 g) and the wax 1 (1.32 g) was prepared and added dropwise from the supply port into the apparatus (step 2).

Next, with maintaining the rolling state, the metal hydroxide (9.60 g) was supplied into the apparatus after three minutes, and the rolling state was maintained for three minutes (step 3). By the step 3, the metal hydroxide and the specific fatty acid 1 reacted to form a solidified layer on the surface of the water-soluble granular fertilizer.

Next, the following as one cycle was repeated 13 cycles.

(One Cycle) With maintaining the rolling state, a liquid obtained by mixing the specific fatty acid 1 (2.68 g) and the wax 1 (1.32 g) was added dropwise from the supply port into the apparatus (step 2). The metal hydroxide (9.60 g) was supplied into the apparatus after three minutes, and the rolling state was maintained for three minutes (step 3).

Next, after rolling for six minutes, by gradually cooling to room temperature (about 25°C), a coated fertilizer was obtained.

(Example 2)

A coated fertilizer was obtained by the same method as in Example 1 except that the cycle number was changed to 20 cycles.

(Example 3)

A coated fertilizer was obtained by the same method as in Example 2 except that the wax 2 was used instead of the wax 1.

(Example 4)

A coated fertilizer was obtained by the same method as in Example 1 except that a mixture obtained by mixing the metal hydroxide (9.30 g) and the sulfur powder (0.30 g) in advance was used instead of the metal hydroxide.

(Example 5)

A coated fertilizer was obtained by the same method as in Example 1 except that a mixture obtained by mixing the metal hydroxide (8.60 g) and the sulfur powder (1.00 g) in advance was used instead of the metal hydroxide.

(Comparative Example 4)

A coated fertilizer was obtained by the same method as in Example 1 except that a mixture obtained by mixing the metal hydroxide (8.16 g) and the sulfur powder (1.44 g) in advance was used instead of the metal hydroxide.

(Example 6)

The coated granular fertilizer obtained in Example 1 (290 g) was charged to a drum-type rolling coating apparatus having a diameter of 300 mm, and the temperature in the coating apparatus was maintained at 70°C by a hot air generator with rolling at 25 rpm.

Next, a mixture of the polyol (0.95 g) and the polyisocyanate (0.45 g) which was heated to 60°C in advance was added dropwise from the supply port into the apparatus.

Next, after rolling for 60 minutes, by gradually cooling to room temperature (about 25°C), a coated fertilizer was obtained.

(Example 7)

A coated fertilizer was obtained by the same method as in Example 6 except that the mass of the polyol and that of the polyisocyanate (mass of polyol/mass of polyisocyanate) were changed to 2.10 g/1.00 g.

(Comparative Example 5)

A coated fertilizer was obtained by the same method as in Example 6 except that the mass of the polyol and that of the polyisocyanate (mass of polyol/mass of polyisocyanate) were changed to 3.80 g/1.80 g.

(Example 8)

A coated fertilizer was obtained by the same method as in Example 1 except that the wax 1 was not used.

(Example 9)

A coated fertilizer was obtained by the same method as in Example 1 except that the specific fatty acid 2 was used instead of the specific fatty acid 1.

(Example 10)

In Example 10, a coated fertilizer was produced by the method 2 described above, as will be described in detail below.

The water-soluble granular fertilizer (250 g) was charged to a drum-type rolling coating apparatus having a diameter of 300 mm, and the temperature in the coating apparatus was maintained at 70°C by a hot air generator with rolling at 25 rpm (step 1).

Next, with maintaining the rolling state, the specific fatty acid 1 (0.67 g) and the metal hydroxide (2.29 g) were each prepared. The specific fatty acid 1 was added dropwise from the supply port into the apparatus, and after rolling for three minutes, the metal hydroxide was introduced from another supply port. The rolling state was maintained for three minutes to obtain a layer A (step a).

Next, with maintaining the rolling state, the wax 1 (0.33 g) was added dropwise into the apparatus, and after rolling for three minutes, the metal hydroxide (0.11 g) was supplied from another supply port into the apparatus. The rolling state was maintained for three minutes to obtain a layer B (step b).

Next, the following as one cycle was repeated 13 cycles.

(One Cycle) While maintaining the rolling state, the specific fatty acid 1 (0.67 g) was added dropwise from the supply port into the apparatus, and after rolling for three minutes, the metal hydroxide (2.29 g) was introduced into the apparatus from another supply port. The rolling state was maintained for three minutes to form a layer A (step a). The wax 1 (0.33 g) was added dropwise, and after rolling for three minutes, the metal hydroxide (0.11 g) was supplied from another supply port into the apparatus. The rolling state was maintained for three minutes to obtain a layer B (step b).

Next, after rolling for six minutes, by gradually cooling to room temperature (about 25°C), a coated fertilizer was obtained.

[Evaluation]

(Measurement of Content of Substance Having Molecular Weight of 10000 or More in Coating Film)

· Pretreatment

The coated fertilizer was pulverized, then washed with water to remove the water-soluble component and filtered to obtain a water-insoluble matter.

The obtained water-insoluble matter was dried in a dryer at 80°C for 24 hours to obtain a measurement sample. The sample was weighed in such a manner that the estimated organic substance content became a concentration of 1 mg/mL (solvent 1,2,4-trichlorobenzene) and shaken and dissolved at 140°C for one hour. When an insoluble matter was contained in the liquid after shaking and dissolution, the insoluble matter was removed by heating filtration using a 0.5 $\mu$m sintered filter, and only the soluble matter was used as a test sample.

· Measurement

The measurement was performed using HLC-8321GPC/HT (detector; RI), using one column of TSKgel guard column $H_{HR}$ (30)HT and three columns of TSKgel GMH$_{HR}$-H (20)HT (manufactured by Tosoh Corporation), using 1,2,4-trichlorobenzene as the eluent under the condition of a flow rate of 1.0 mL/min, an injection amount of 0.3 mL, and a column temperature of 140°C.

· Molecular Weight Analysis

Polystyrenes having known molecular weights (15 points in a range of molecular weight = 20,000,000 to 941) were measured in advance, and a calibration curve of the molecular weight and the retention time was obtained.
Thereafter, the test sample was measured, and the relative molecular weight (polystyrene equivalent value) was determined from the peak position and the retention time of the obtained chromatograph.
The content of the substance having a molecular weight of 10000 or more in the present disclosure was determined by the following expression.

(Area of region with molecular weight of 10000 or more in chromatograph) $\times$ 100/(total peak area of chromatograph)

A case in which no peak was detected in the region with a molecular weight of 10000 or more in the chromatograph was indicated as "< 0.1" in Tables 1 and 2 shown later.

(Measurement of Sulfur Atom Content with Respect to Total Content of Atoms between Atomic Numbers 9 (Fluorine) and 92 (Uranium) in Periodic Table of Elements in Coating Film)

The coated fertilizer was pulverized, then washed with water to remove the water-soluble component and filtered to obtain a water-insoluble matter.
The obtained water-insoluble matter was dried in a dryer at 80°C for 24 hours to obtain a measurement sample.
The measurement sample was subjected to scanning all elements between atomic numbers 9 (fluorine) and 92 (uranium) in the periodic table of elements using a fluorescent X-ray analyzer ("Supermini200" manufactured by Rigaku Holdings Corporation, to measure the component contents of the measurement sample. The condition of the excitation X-ray tube was 50 kV and 4.0 mA.
The sulfur atom content with respect to the total content of the atoms between atomic numbers 9 (fluorine) and 92 (uranium) in the periodic table of elements (also referred to as "sulfur atom content") in the coating film of the present disclosure was determined by the following expression.

(Sulfur atom content of coating film) $\times$ 100/(total content of atoms between atomic numbers 9 (fluorine) and 92 (uranium) in periodic table of elements in coating film)

A case in which the sulfur atom content was less than 1% by mass was indicated as "1 <" in Tables 1 and 2 shown later. A case in which the sulfur atom content was more than 99% by mass was indicated as "> 99" in Tables 1 and 2 shown later.

(Average Film Thickness of Coating Film)

Regarding the thickness of the coating film, the cross section of the coated fertilizer was observed using a scanning electron microscope (SU8010 manufactured by Hitachi, Ltd.) to measure the film thicknesses of five points, and the average value (arithmetic average value) was calculated.

(Preparation of Shells)

An accelerated test of retaining the coated fertilizer for 17 days in water at 60°C to elute the water-soluble fertilizer component was performed to obtain shells (particles composed of the coating film).

(Measurement of Average Crushing Load)

The compression fracture strength of the shell was measured under the condition of a descending speed of 20 mm/min, using a digital force gauge (manufactured by IMADA CO., LTD., product number: ZP-500N) and a motorized test stand (manufactured by IMADA CO., LTD., MX-500N). The first fracture point was used as the measurement result. The measurement was performed on 30 shell particles, and the average crushing load (arithmetic average value) was determined.

An average crushing load of 0.7 N or less is regarded as acceptable. The smaller the average crushing load is, the more likely the particle disintegrates after the fertilizing component is eluted, which is preferable.

(Number of Cracks Generated after Mechanical Fertilization)

Mechanical fertilization was performed under the following condition (the sample after fertilization was recovered at the dropping port), and the appearance of 100 particles obtained was observed. The number of the sample particles having a crack generated on the surface (referred to as "number of cracks generated after mechanical fertilization") was examined.

(Condition for Mechanical Fertilization)

Using a transplanter in lateral rows for paddy rice manuring (EP6D; manufactured by KUBOTA Corporation) adjusted to a fertilization amount of 5 kg/10 a, 100 g of the coated fertilizer was put into a hopper, and the coated fertilizer was recovered from a dropping port.

The recovered coated fertilizer (100 particles) was immersed in a red ink solution for three minutes to color the cracked portions of the coated fertilizer and then observed with an optical microscope. The sample is regarded as acceptable when the number of particles with crack generation is 15 or less out of the 100 particles. The smaller the number of particles with crack generation, the easier the particle withstands mechanical fertilization, which is preferable.

The results are shown in Tables 1 and 2 below.

[Table 1]

Table 1

| | Comparative Example 1 | Comparative Example 2 | Comparative Example 3 | Example 1 | Example 2 | Example 3 | Example 4 | Example 5 |
|---|---|---|---|---|---|---|---|---|
| Content (Area%) of Substance Having Molecular Weight of 10000 or More | <0.1 | <0.1 | 81.5 | <0.1 | <0.1 | <0.1 | <0.1 | <0.1 |
| Sulfur Atom Content (% by Mass) | >99 | >99 | 1< | 1< | 1< | 1< | 3 | 10 |
| Average Film Thickness ($\mu$m) | 82 | 98 | 77 | 62 | 79 | 78 | 58 | 53 |
| Average Crushing Load (N) | 1.7 | 3.4 | 1.4 | 0.1 | 0.2 | 0.2 | 0.2 | 0.1 |
| Number of Cracks Generated after Mechanical Fertilization (Particles/100 Particles) | 42 | 21 | 2 | 5 | 4 | 4 | 10 | 14 |

[Table 2]

Table 2

|  | Comparative Example 4 | Example 6 | Example 7 | Comparative Example 5 | Example 8 | Example 9 | Example 10 |
|---|---|---|---|---|---|---|---|
| Content (Area%) of Substance Having Molecular Weight of 10000 or More | <0.1 | 2.7 | 6.6 | 12.8 | <0.1 | <0.1 | <0.1 |
| Sulfur Atom Content (% by Mass) | 15 | 1< | 1< | 1< | 1< | 1< | 1< |
| Average Film Thickness ($\mu$m) | 48 | 67 | 70 | 78 | 50 | 59 | 62 |
| Average Crushing Load (N) | 0.1 | 0.2 | 0.4 | 0.8 | 0.1 | 0.1 | 0.1 |
| Number of Cracks Generated after Mechanical Fertilization (Particles/100 Particles) | 29 | 5 | 3 | 2 | 10 | 12 | 14 |

From the above results, it was found that the coated fertilizers of the Examples contained a coating film which could exert well-balanced properties of having enough strength to withstand mechanical fertilization and of easily disintegrating at a low load after the fertilizing component was eluted.

INDUSTRIAL APPLICABILITY

According to the present disclosure, a coated fertilizer containing a coating film which can exert well-balanced properties of having enough strength to withstand mechanical fertilization and of easily disintegrating at a low load after the fertilizing component is eluted can be provided.

Although the present disclosure has been explained in detail and referring to specific embodiments, it will be apparent to a person skilled in the art that various changes and modifications can be made without departing from the spirit and the scope of the present disclosure.

The present application is based on a Japanese Patent Application (No. 2023-74671) filed on April 28, 2023 and a Japanese Patent Application (No. 2023-99249) filed on June 16, 2023, the contents of which are incorporated herein by reference.

**Claims**

1. A coated fertilizer comprising:

   a water-soluble granular fertilizer and a coating film covering the water-soluble granular fertilizer,
   wherein a content of a substance having a molecular weight of 10000 or more in the coating film is 0 to 10%, and
   a sulfur atom content with respect to a total content of the atoms between atomic numbers 9 (fluorine) and 92 (uranium) in the periodic table of elements in the coating film is 0 to 11% by mass.

2. The coated fertilizer according to claim 1, wherein the content of the substance having a molecular weight of 10000 or more in the coating film is 0 to 7%.

3. The coated fertilizer according to claim 1, wherein the content of the substance having a molecular weight of 10000 or more in the coating film is 0 to 3%.

4. The coated fertilizer according to claim 1, wherein the content of the substance having a molecular weight of 10000 or more in the coating film is 0 to 1%.

5. The coated fertilizer according to claim 1, wherein the coating film does not substantially contain the substance having a molecular weight of 10000 or more.

6. The coated fertilizer according to claim 1 or 2, wherein the sulfur atom content with respect to the total content of the atoms between atomic numbers 9 (fluorine) and 92 (uranium) in the periodic table of elements in the coating film is 0 to 9% by mass.

7. The coated fertilizer according to claim 1 or 2, wherein the sulfur atom content with respect to the total content of the atoms between atomic numbers 9 (fluorine) and 92 (uranium) in the periodic table of elements in the coating film is 0 to 5% by mass.

8. The coated fertilizer according to claim 1 or 2, wherein the sulfur atom content with respect to the total content of the atoms between atomic numbers 9 (fluorine) and 92 (uranium) in the periodic table of elements in the coating film is 0 to 2% by mass.

9. The coated fertilizer according to claim 1 or 2, wherein the coating film does not substantially contain any sulfur atom.

10. A coated fertilizer comprising:

   a water-soluble granular fertilizer and a coating film covering the water-soluble granular fertilizer,
   wherein an average crushing load of particles obtained by replacing the water-soluble granular fertilizer contained in the coated fertilizer with water is 0.5 N or less.

11. A coated fertilizer wherein a number of particles of the coated fertilizer having a crack generated on a surface of the coated fertilizer is 15 or less after 100 particles of the coated fertilizer according to claim 1 or 10 are subjected to mechanical fertilization under the following condition:
(Condition for Mechanical Fertilization)
using a transplanter in lateral rows for paddy rice manuring adjusted to a fertilization amount of 5 kg/10 a, 100 g of the coated fertilizer is put into a hopper, and the coated fertilizer is recovered from a dropping port.

FIG.1

## INTERNATIONAL SEARCH REPORT

| International application No. |
|---|
| **PCT/JP2024/016022** |

**A.  CLASSIFICATION OF SUBJECT MATTER**

*C05G 5/30*(2020.01)i; *B01J 2/00*(2006.01)i; *B01J 2/30*(2006.01)i; *C05F 11/00*(2006.01)i; *C05G 3/00*(2020.01)i
FI:  C05G5/30; C05G3/00; C05F11/00; B01J2/00 B; B01J2/00 C; B01J2/30

According to International Patent Classification (IPC) or to both national classification and IPC

**B.  FIELDS SEARCHED**

Minimum documentation searched (classification system followed by classification symbols)

C05G5/30; B01J2/00; B01J2/30; C05F11/00; C05G3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | CN 103058759 A (SHIKEFENG CHEMICAL INDUSTRY CO., LTD.) 24 April 2013 (2013-04-24) paragraphs [0001], [0020]-[0059] | 1-9 |
| A | | 10-11 |
| X | JP 2001-226184 A (ASAHI KASEI KABUSHIKI KAISHA) 21 August 2001 (2001-08-21) paragraphs [0001], [0008], [0020] | 1, 6-9 |
| A | | 2-5, 10-11 |
| A | WO 2012/147668 A1 (JCAM AGRI CO., LTD.) 01 November 2012 (2012-11-01) entire text | 1-11 |
| A | JP 2002-145691 A (UBE INDUSTRIES, LTD.) 22 May 2002 (2002-05-22) entire text | 1-11 |

☐ Further documents are listed in the continuation of Box C.          ☑ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"  document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&"  document member of the same patent family |
| "P" | document published prior to the international filing date but later than the priority date claimed | |

| Date of the actual completion of the international search | Date of mailing of the international search report |
|---|---|
| **16 July 2024** | **30 July 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/016022**

| Patent document cited in search report | | | Publication date (day/month/year) | Patent family member(s) | | | Publication date (day/month/year) |
|---|---|---|---|---|---|---|---|
| CN | 103058759 | A | 24 April 2013 | (Family: none) | | | |
| JP | 2001-226184 | A | 21 August 2001 | (Family: none) | | | |
| WO | 2012/147668 | A1 | 01 November 2012 | KR | 10-2013-0133895 | A | |
| | | | | CN | 103619781 | A | |
| JP | 2002-145691 | A | 22 May 2002 | (Family: none) | | | |

Form PCT/ISA/210 (patent family annex) (July 2022)

## REFERENCES CITED IN THE DESCRIPTION

**Patent documents cited in the description**

- JP 2007084414 A
- WO 2012147668 A1

- JP 2023074671 A
- JP 2023099249 A